# EUROPÄISCHE PATENTSCHRIFT

(11) **EP 3 277 491 B1**
(45) Veröffentlichungstag und Bekanntmachung des Hinweises auf die Patenterteilung: **24.06.2020**
(21) Anmeldenummer: 15798072.3
(22) Anmeldetag: 20.11.2015
(51) Int. Cl.: B29D 33/00, B29C 43/02, B60G 21/055

(54) **LAGERELEMENT UND HERSTERLLUNGSVERFAHREN FÜR EINEN STABILISATOR EINES FAHRZEUGS**
BEARING ELEMENT AND METHOD FOR PRODUCING A STABILIZER OF A VEHICLE
ÉLÉMENT DE SUPPORT ET PROCÉDÉ DE FABRICATION D'UNE BARRE STABILISATRICE DE VÉHICULE

(30) Priorität: 30.03.2015 DE 102015104864
(43) Veröffentlichungstag der Anmeldung: 07.02.2018
(73) Patentinhaber: ThyssenKrupp Federn und Stabilisatoren GmbH, 58119 Hagen (DE); thyssenkrupp AG, 45143 Essen (DE)
(72) Erfinder: LECHNER, Dieter, 40470 Düsseldorf (DE); BERNARD, Sebastian, 51069 Köln (DE)
(74) Vertreter: thyssenkrupp Intellectual Property GmbH
(86) Internationale Anmeldenummer: PCT/EP2015/077201
(87) Internationale Veröffentlichungsnummer: WO 2016/155851

(56) Entgegenhaltungen:
- WO-A1-2005/058622
- DE-A1-102009 011 818
- US-A- 2 606 020

## Beschreibung

Die vorliegende Erfindung betrifft ein Lagerelement zur Aufnahme eines Stabilisators an einem Fahrzeug, aufweisend einen ersten Elastomerkörper und einen zweiten Elastomerkörper, die halbschalenförmig ausgeführt sind und unter Bildung eines Aufnahmedurchgangs zur Aufnahme einer Stabilisatorstange aneinander angeordnet sind, und wobei die Elastomerkörper auf der Stabilisatorstange des Stabilisators aufpressbar und stoffschlüssig aufbringbar sind, sodass sich die Stabilisatorstange durch den Aufnahmedurchgang hindurch erstreckt.

### STAND DER TECHNIK

Einen einfachen Aufbau eines Lagerelementes der hier interessierenden Art zeigt die DE 10 2010 054 503 A1. Das Lagerelement dient zur Aufnahme eines Stabilisators an einem Fahrzeug und weist Elastomerkörper auf, die als Gummilager bezeichnet sind, wobei erkennbar ist, dass die beiden Elastomerkörper zur Bildung des gattungsgemäßen Lagerelementes zueinander nicht formgleich ausgeführt sein müssen. Der untere Elastomerkörper, der an das Kraftfahrzeugbauteil angrenzt, weist eine von einem oberen Elastomerkörper abweichende Querschnittsform auf. Jedoch bilden die halbschalenförmigen Innenbereiche der beiden Elastomerkörper eine kreisrunde Innenkontur, durch die die Stabilisatorstange hindurchläuft. Gehalten sind die beiden Elastomerkörper durch ein Aufnahmemittel in Form einer Schelle. Zum Aufpressen der Elastomerkörper auf die Stabilisatorstange kommt in der Regel ein Werkzeug zum Einsatz, das ein Aufnahmemittel zur Aufnahme der Elastomerkörper umfasst oder dieses selbst bildet, wobei das Aufnahmemittel auch durch eine Schelle gebildet werden kann, die für die spätere Befestigung des Lagerelementes an einem Kraftfahrzeugbauteil dient. Die Fügerichtung steht dabei senkrecht auf der Teilungsebene zwischen den beiden Elastomerkörpern.

Ein weiteres Ausführungsbeispiel eines Lagerelementes zeigt die DE 10 2009 011 818 A1. Das gezeigte Lagerelement weist zwei Elastomerkörper auf, die zum Aufpressen auf die Stabilisatorstange in zwei sogenannte Quetten eingesetzt werden. Die Quetten bilden Formwerkzeuge mit einer Innenkontur, in die die Elastomerkörper, die als Polymerkörper bezeichnet sind, über ihre Außenkontur eingesetzt werden. Die Innenkontur der Quetten ist dabei der Außenkontur der Elastomerkörper angepasst, wobei die Außenkontur Erhebungen aufweist, um beispielsweise im späteren Betrieb der Lagerelemente ein Verdrehen der Elastomerkörper in der Schelle zu verhindern.

Die Lagerelemente sind ausgebildet zur Aufnahme des Stabilisators an einem Fahrzeug, und der Stabilisator dient der Wankstabilisierung des Fahrzeugs. Der Stabilisator weist eine Stabilisatorstange auf, wobei auch Stabilisatoren bekannt sind, die aus mehreren Stabilisatorstangen aufgebaut sind. Die Stabilisatorstange ist dabei üblicherweise durch die Elastomerkörper und darüber fixierte Anbindungen mit einem Kraftfahrzeugbauteil verbunden, beispielsweise dem Fahrzeugrahmen. Stand der Technik ist dabei die stoffschlüssige Verbindung der Elastomerkörper mit der Stabilisatorstange. Zur Herstellung dieser stoffschlüssigen Verbindung kommen beispielsweise Klebstoffe oder Haftvermittler zum Einsatz. Einflussgrößen für die Reaktion des Klebstoffes oder Haftvermittlers mit dem Elastomerkörper und mit der zumeist beschichteten Stabilisatorstange können beispielsweise Druck, Zeit und Temperatur sein. Nachteilhafterweise erfolgt häufig keine definierte, insbesondere gleichmäßige Druckverteilung über der gesamten Kontaktfläche zwischen der Oberfläche der Stabilisatorstange und den Elastomerkörpern, sodass der dazwischen befindliche Haftvermittler über den Umfang einen unterschiedlichen Druck erfährt. Auch kommt es vor, dass der der Klebstoff in einer noch fließfähigen Phase aus Teilbereichen zwischen der Stabilisatorstange und den Elastomerkörpern herausgequetscht wird. Die Stabilisatorstange weist häufig zumindest in den Setzstellen der Lagerelemente einen Kreisquerschnitt auf, wobei auch die Innenkontur der Elastomerkörper zur Bildung des Aufnahmedurchgangs eine Kreiskontur aufweist. Folge dieser Problemstellung ist, dass aufgrund einer ungleichen oder wenigstens unvorteilhaften Druckverteilung die Haftung zwischen den Elastomerkörpern und der Stabilisatorstange nicht vollumfänglich gleich ist und infolge dessen an Stellen schlechterer Haftung bevorzugt ein Versagen der Verbindung entstehen kann.

### OFFENBARUNG DER ERFINDUNG

Aufgabe der Erfindung ist die Weiterbildung eines Lagerelementes zur Aufnahme eines Stabilisators an einem Fahrzeug, bei dem eine verbesserte Haftung zwischen den Elastomerkörpern und der Stabilisatorstange erzielt wird. Überdies ist es die Aufgabe der Erfindung, ein Verfahren zur Anordnung eines Lagerelementes an einer Stabilisatorstange vorzuschlagen, mit dem die vorbezeichneten Nachteile überwunden werden können. Speziell ist die Aufgabe der Erfindung, die Druckverteilung zwischen den Elastomerkörpern und der Stabilisatorstange des Lagerelementes zu optimieren und insbesondere zu vergleichmäßigen.

Diese Aufgabe wird ausgehend von einem Lagerelement gemäß dem Oberbegriff des Anspruches 1 und ausgehend von einem Verfahren gemäß den bekannten Merkmalen des Anspruches 10 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die Innenkontur des Aufnahmedurchgangs von einer Kreiskontur abweichend ausgebildet ist.

Der Kern der Erfindung betrifft eine spezielle Ausführung der Elastomerkörper mit einer Innenkontur, die bei einem Aufeinanderbringen einen Aufnahmedurchgang bilden, der eine Innenkontur aufweist, die von einer Kreiskontur abweicht. Werden diese Elastomerkörper auf der Stabilisatorstange aufgepresst, so kann abhängig von der Form der Innenkontur eine definierte Druckverteilung zwischen den Elastomerkörpern und der Stabilisatorstange erreicht werden. Vordergründig kann die Abweichung von der Kreiskontur so ausgeführt werden, dass eine über dem Umfang gleiche Druckverteilung erzielt wird, es kann jedoch auch vorteilhaft sein, wenn die Druckverteilung über dem Umfang relativ zur Fügerichtung, aus der die beiden Elastomerkörper aufeinander gefügt werden, ungleiche, aber definierte Werte annimmt. Die tatsächliche Definition der Druckverteilung abhängig von der Fügerichtung der Elastomerkörper kann erfindungsgemäß durch die Gestaltung der Innenkontur der Aufnahmedurchgänge in Abweichung von einer Kreiskontur eingestellt werden.

Die erfindungsgemäße Innenkontur des Aufnahmedurchgangs weicht dabei makroskopisch von einer Kreiskontur ab, sodass eine Innenkontur mit Strukturierungen, Wellen, Riefen, Zähne, Zacken oder sonstigen Oberflächenunregelmäßigkeiten nicht unter den Gedanken der Erfindung fallen.

Zwischen den Elastomerkörpern und der Stabilisatorstange kann ein Haftvermittler eingebracht sein. Insbesondere kann die Innenkontur des Aufnahmedurchgangs dabei derart ausgebildet sein, dass bei einem Aufpressen der Elastomerkörper auf die Stabilisatorstange der Haftvermittler zwischen Innenkontur und Stabilisatorstange gleichförmig oder definiert nach einem vorgegebenen Druckprofil gepresst wird.

Nach einer vorteilhaften Weiterführung des Erfindungsgedankens ist die Innenkontur des Aufnahmedurchgangs derart ausgebildet, dass bei einem Aufpressen der Elastomerkörper auf die Stabilisatorstange eine über dem Umfang der Stabilisatorstange gleichförmige Verteilung des Klebstoffes erzeugbar ist. Ist die Innenkontur beispielsweise mit einem veränderlichen Radius ausgebildet, der so ausgestaltet ist, dass der Haftvermittler nicht aus dem Haupt-Krafteinleitungsbereich herausgequetscht wird, so kann bei Aufbringung der vollen Montagekraft schließlich eine gleichförmige Verteilung des Haftvermittlers über dem Umfang der Stabilisatorstange erreicht werden. Insbesondere wird der Haftvermittler nicht mehr aus dem Bereich der Krafteinleitung um die Fügerichtung herum herausgedrückt.

Gemäß einer vorteilhaften Ausführungsform des erfindungsgemäßen Lagerelementes weist die Innenkontur Aufdickungen auf, die in den Aufnahmedurchgang zur Hindurchführung der Stabilisatorstange hineinragen und die bei Anordnung der Elastomerkörper auf der Stabilisatorstange verformbar sind. Durch die Nachgiebigkeitseigenschaften der Elastomerkörper können die Aufdickungen nachgeben, sodass bei Aufbringen der vollen Montagekraft ein vollumfänglicher Kontakt zwischen den Elastomerkörpern und der Stabilisatorstange erzielt wird. Insbesondere können die Aufdickungen so ausgeführt sein, dass Bereiche besonders hoher Drücke in der Montageachse vermieden werden, und sodass auch keine Bereiche sehr schwacher Drücke entstehen, die sich zum Beispiel seitlich zur Fügeachse befinden.

Beispielsweise sind die Elastomerkörper aus einer Fügerichtung aufeinandergefügt, und die Aufdickungen befinden sich seitlich zur Fügerichtung in der Innenkontur des Aufnahmedurchgangs. Alternativ kann aber auch vorgesehen sein, dass die Aufdickungen genau im Bereich der Fügerichtung in der Innenkontur des Aufnahmedurchgangs ausgebildet sind. Über dem Umfang der Innenkontur verteilt können auch mehrere, insbesondere zwei oder vier Aufdickungen ausgebildet sein. Die Aufdickungen können auch Freiformflächen umfassen, die beispielsweise computernumerisch berechnet sind und welche sich beispielsweise aus einer Topologieoptimierung ergeben können.

Verläuft die Fügerichtung in einer 6-12-Uhr-Position, so können beispielsweise in der 3-Uhr-Position und in der 9-Uhr-Position Aufdickungen vorgesehen sein, die schließlich zu einer gleichförmigen Druckverteilung über dem Umfang der Stabilisatorstange führen. Im Rahmen der Erfindung ist es jedoch auch denkbar, die Aufdickungen gezielt in der 12-Uhr-Position und in der 6-Uhr-Position vorzusehen, beispielsweise wenn eine gezielte, gegebenenfalls auch ungleichmäßige Druckverteilung erreicht werden soll.

Die Aufdickungen im nicht kraftbeaufschlagten Zustand der Elastomerkörper ragen dabei in die Innenkontur des Aufnahmedurchgangs hinein. Durch die elastischen Rückfedereigenschaften der Elastomerkörper schmiegen sich diese jedoch bei Aufbringen der Montagekraft unabhängig von der Ausgestaltung der Aufdickungen vollumfänglich an die Umfangsfläche der Stabilisatorstange an.

Wenigstens einer der Elastomerkörper kann beispielsweise in einem Aufnahmemittel einsitzen, wobei die Abweichung der Innenkontur des Aufnahmedurchgangs von einer Kreiskontur durch eine Formgebung des Aufnahmemittels gebildet ist. Im nicht kraftbeaufschlagten, vereinzelten Zustand des Elastomerkörpers kann dieser eine Innenkontur gemäß einer Kreisform aufweisen, und erst bei einem Einsetzen des Elastomerkörpers in das Aufnahmemittel, beispielsweise in ein Werkzeug oder beispielsweise in eine Aufnahmeschelle zur späteren Montage des Stabilisators an dem Kraftfahrzeugbauteil, drücken im Aufnahmemittel eingebrachte Einbuchtungen die Aufdickungen in den Elastomerkörper, indem das Material des Elastomerkörpers von der Außenseite bis zur Innenkontur durchgedrückt wird. Insbesondere wenn die Elastomerkörper über zugeordnete Aufnahmemittel auf die Stabilisatorstange aufgepresst werden, können durch eine spezielle Formgebung des Aufnahmemittels, beispielsweise Einbuchtungen, die von der Außenseite in die Elastomerkörper drücken, die gewünschte Abweichung von der Innenkontur erzielt werden.

Die Erfindung richtet sich weiterhin auf ein Verfahren zur Anordnung eines Lagerelementes an eine Stabilisatorstange eines Stabilisators für ein Fahrzeug, wobei ein erster Elastomerkörper und ein zweiter Elastomerkörper mit jeweils halbschalenförmiger Gestalt bereitgestellt werden, und wobei die Elastomerkörper unter Bildung eines Aufnahmedurchgangs aneinander angeordnet werden, sodass sich die Stabilisatorstange des Stabilisators durch den Aufnahmedurchgang hindurch erstreckt. Erfindungsgemäß wird zunächst wenigstens ein Elastomerkörper mit einer Innenkontur zur Bildung des Aufnahmedurchgangs bereitgestellt, die von einer Kreiskontur abweichend ausgebildet ist und erfindungsgemäß wird der Elastomerkörper auf die Stabilisatorstange unter elastischer Verformung wenigstens einer der Innenkonturen der Elastomerkörper aufgepresst, sodass sich die Innenkontur des wenigstens einen Elastomerkörpers an die Kontur der Stabilisatorstange anformt.

Gemäß einer Weiterbildung des Verfahrens wird wenigstens ein Aufnahmemittel bereitgestellt, beispielsweise ein Werkzeug oder eine Schelle zur späteren Befestigung der Lagereinheit an einem Kraftfahrzeugbauteil, wobei die Abweichung der Innenkontur des Aufnahmedurchgangs von einer Kreiskontur durch eine Formgebung des Aufnahmemittels gebildet ist.

Gemäß einer vorteilhaften Weiterführung des erfindungsgemäßen Verfahrens wird der Elastomerkörper im Aufnahmemittel aufgenommen, wobei das Aufnahmemittel wenigstens eine Einbuchtung aufweist, die sich bei Aufbringen einer Montagekraft im Elastomerkörper geometrisch abbildet, sodass die in die Innenkontur weisende Aufdickung gebildet wird.

Die Bildung von Aufdickungen kann in nur einem Elastomerkörper vorgenommen werden, wobei auch Aufnahmemittel zur Aufnahme beider Elastomerkörper vorgesehen sein können, sodass in jedem der Elastomerkörper Aufdickungen vorhanden sind.

In Abstraktion der Erfindung kann eine bestimmte Druckverteilung zwischen den Elastomerkörpern und der Stabilisatorstange auch dadurch erzeugt werden, dass bei einem Aufpressen der Elastomerkörper über das Werkzeug, beispielsweise mittels des Aufnahmemittels, die gewünschte Druckverteilung erzeugt wird, und die Erzeugung der Aufdickungen bzw. die Abweichung der Innenkontur von einer Kreiskontur erfolgt nur virtuell, da sich bereits bei Aufbringen der Montagekraft die Innenkontur der kreisrunden Außenkontur der Stabilisatorstange anpasst. Aufdickungen entstehen damit nicht geometrisch sondern nur in Form von möglichen Verformungen, sofern die Stabilisatorstange bei Aufbringen der Montagekraft entfiele.

### AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig. 1: eine vereinfachte Darstellung eines Stabilisators mit einer Stabilisatorstange und mit zwei Lagerelementen zur Aufnahme der Stabilisatorstange an einem Kraftfahrzeugbauteil (nicht gezeigt),
- Fig. 2: eine schematisierte Ansicht eines Abschnittes der Stabilisatorstange mit einem Lagerelement umfassend zwei Elastomerkörper,
- Fig. 3: eine Querschnittsansicht von zwei aufeinander gebrachten Elastomerkörpern mit einer ersten Ausgestaltung von Aufdickungen zur Bildung einer unrunden Innenkontur,
- Fig. 4: eine Querschnittsansicht von zwei aufeinander gebrachten Elastomerkörpern mit einer weiteren Ausgestaltung von Aufdickungen zur Bildung einer unrunden Innenkontur,
- Fig. 5: eine Querschnittsansicht von zwei aufeinander gebrachten Elastomerkörpern mit einer weiteren Ausgestaltung von Aufdickungen mit einer Innenkontur aufweisend mehrere Aufdickungen,
- Fig. 6: eine schematische Ansicht von zwei Elastomerkörpern, die unter Aufbringung einer Montagekraft auf einer Stabilisatorstange aufgepresst sind, wobei mit mehreren Kraftpfeilen eine gleichförmige Kraftverteilung über dem Umfang der Stabilisatorstange angedeutet ist,
- Fig. 7: ein abgewandeltes Ausführungsbeispiel eines Lagerelementes mit Elastomerkörpern, die in einem Aufnahmemittel aufgenommen sind und
- Fig. 8: das Ausführungsbeispiel gemäß Figur 7 in einem fertig montierten Zustand an einem Kraftfahrzeugbauteil.

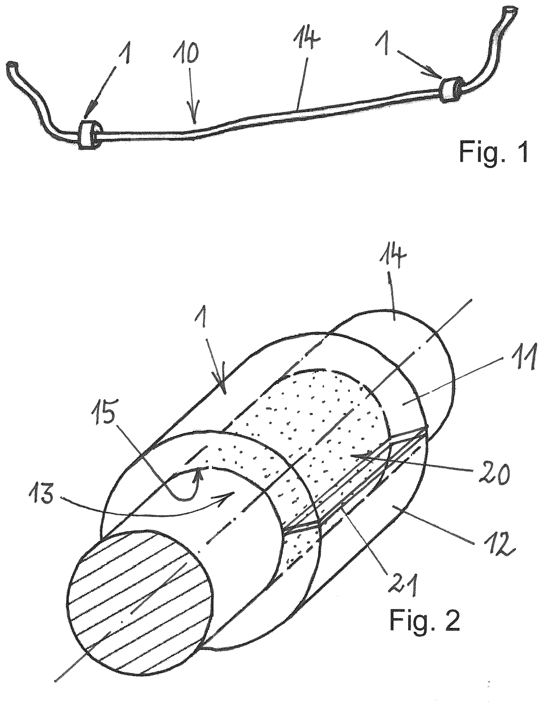

Figur 1 zeigt in einer perspektivischen Ansicht einen Stabilisator 10 für ein Kraftfahrzeug, und der Stabilisator 10 weist eine Stabilisatorstange 14 auf, die über zwei Lagerelemente 1 an einem nicht dargestellten Kraftfahrzeugbauteil aufgenommen werden kann. Der Stabilisator dient zur Wankstabilisierung des Fahrzeugs und ist üblicherweise durch Elastomerlager und darüber fixierte Anbindungen mit dem Fahrzeug verbunden. Die Elastomerlager bilden Bestandteile der Lagerelemente 1, die starr mit dem Kraftfahrzeugbauteil verbunden werden, beispielsweise mit dem Fahrzeugrahmen vermittels entsprechenden Aufnahmemitteln. Dadurch kann die Stabilsatorstange 14 leichte Torsionsbewegungen im Lagerelement 1 ausführen.

Figur 2 zeigt in einer vergrößerten Ansicht schematisch ein Lagerelement 1 in Anordnung an einer abschnittsweise dargestellten Stabilisatorstange 14. Das Lagerelement 1 weist einen ersten Elastomerkörper 11 und einen zweiten Elastomerkörper 12 auf, und die Elastomerkörper 11 und 12 sind halbschalenförmig ausgeführt und sich gegenüberliegend an der Stabilisatorstange 14 angeordnet und bilden einen Aufnahmedurchgang 13, durch den sich die Stabilisatorstange 14 hindurch erstreckt. Die Elastomerkörper 11 und 12 sind halbschalenförmig ausgeführt und in einer Teilungsebene 21 aufeinandergebracht. Die Elastomerkörper 11 und 12 bilden eine Innenkontur 15, die dem Kreisquerschnitt der Stabilisatorstange 14 angepasst ist. Die Elastomerkörper 11 und 12 sind unter Aufbringung einer Montagekraft auf die Stabilisatorstange 14 aufgepresst und auf dieser gehalten, beispielsweise mit einem Aufnahmemittel, das die Darstellung ebenfalls nicht zeigt.

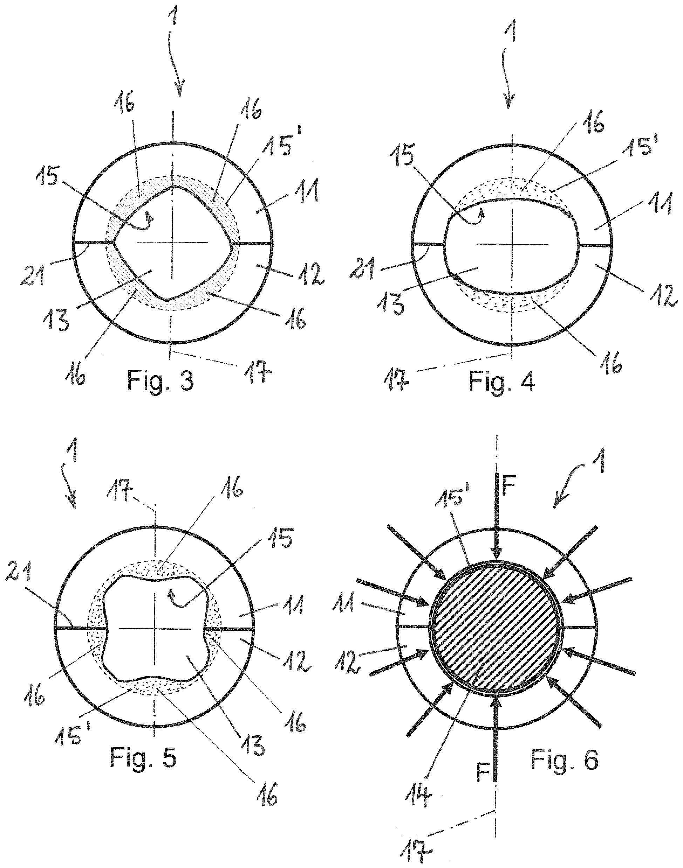

Die Figuren 3, 4 und 5 zeigen Ausführungsbeispiele von Lagerelementen 1 mit verschiedenen Ausgestaltungen der Erfindungsmerkmale. Die Lagerelemente 1 weisen einen ersten Elastomerkörper 11 und einen zweiten Elastomerkörper 12 auf, und die Elastomerkörper 11 und 12 sind halbschalenförmig ausgeführt und in einer jeweiligen Teilungsebene 21 aufeinandergebracht. Durch die halbschalenförmige Ausbildung der Elastomerkörper 11 und 12 entsteht ein Aufnahmedurchgang 13, durch den eine nicht gezeigte Stabilisatorstange hindurchläuft, wenn die Elastomerkörper 11 und 12 auf diese aufgepresst sind. Sind die Elastomerkörper 11 und 12 auf eine Stabilisatorstange mit einem Kreisquerschnitt aufgepresst, so ergibt sich unter elastischer Verformung der Elastomerkörper 11, 12 eine ebenfalls kreisförmige Innenkontur 15', die mit einer gestrichelten Linie angedeutet ist.

Die Innenkontur 15 gemäß den Ausführungsbeispielen in den Figuren 3, 4 und 5 weist von einer Kreiskontur ab, wie im Folgenden näher erläutert wird.

Figur 3 weist Elastomerkörper 11 und 12 mit in den Aufnahmedurchgang 13 weisenden Aufdickungen 16 auf. Mit Bezug auf die Fügerichtung 17, aus der die beiden halbschalenförmigen Elastomerkörper 11, 12 aufeinander gefügt sind, sind die Aufdickungen 16 seitlich vorgesehen, sodass jeder der Elastomerkörper 11 und 12 zwei Aufdickungen 16 aufweist. Werden die Elastomerkörper 11 und 12 auf eine Stabilisatorstange 14 aufgepresst, indem diese in Fügerichtung 17 mit einer Montagekraft beaufschlagt werden, so schmiegen sich die Elastomerkörper 11, 12 der kreisförmigen Innenkontur 15' der Stabilisatorstange (nicht gezeigt) an, und die Aufdickungen 16 federn elastisch zurück. Im Ergebnis kann sich eine im Wesentlichen gleichförmige Druckverteilung über dem Umfang des Aufnahmedurchgangs 13 ergeben.

Figur 4 zeigt ein Ausführungsbeispiel mit Aufdickungen 16, die im Bereich der Fügerichtung 17 liegen. Dadurch kann sich eine spezielle Druckverteilung ergeben, die beispielsweise gewollt sein kann mit Maximalwerten im Bereich der Fügerichtung und mit Minimalwerten seitlich zur Fügerichtung.

Figur 5 zeigt ein weiteres Ausführungsbeispiel des Lagerelementes 1 mit Elastomerkörpern 11 und 12, die unter Bildung des Aufnahmedurchgangs 13 vier Aufdickungen 16 aufweisen. Die Aufdickungen 16 befinden sich sowohl im Bereich der Fügerichtung 17 als auch lateral zur Fügerichtung 17.

Figur 6 zeigt beispielhaft einen Querschnitt durch zwei Elastomerkörper 11 und 12, die auf eine Stabilisatorstange 14 aufgepresst sind. Das Aufpressen der Elastomerkörper 11 und 12 erfolgt dabei unter Aufbringung einer Montagekraft F in Fügerichtung 17. Die Vielzahl der Kraftpfeile deutet eine über dem Umfang im Wesentlichen gleiche Kraftverteilung an, indem die Aufdickungen (siehe Ausführungsbeispiele der Figuren 3, 4 und 5) zurückfedern und die Elastomerkörper 11 und 12 nehmen die kreisrunde Innenkontur 15' an.

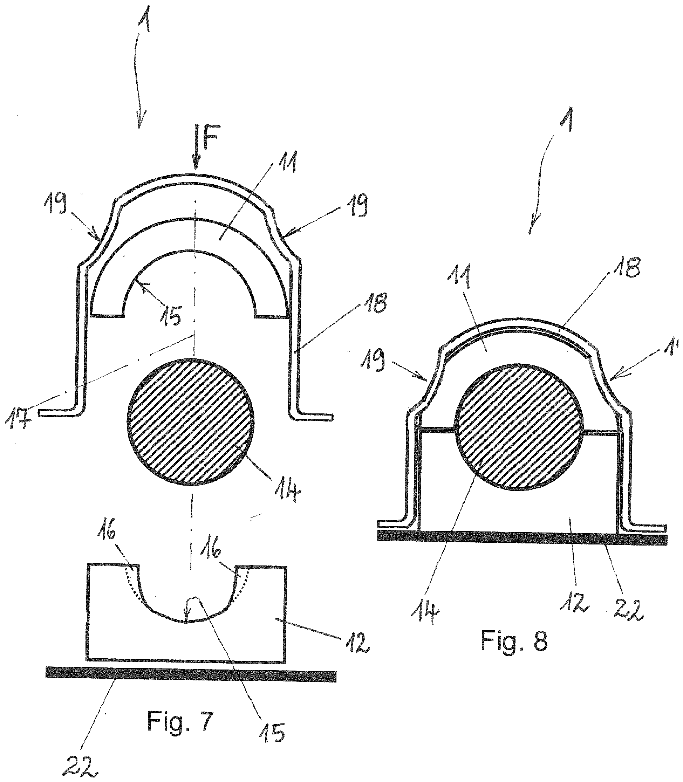

Figur 7 zeigt ein abgewandeltes Ausführungsbeispiel eines Lagerelementes 1 mit einem ersten Elastomerkörper 11 und einem zweiten Elastomerkörper 12, und die beiden Elastomerkörper 11, 12 sind beabstandet zur Stabilisatorstange 14 dargestellt und befinden sich folglich in einem kraftlosen Zustand. Zur Aufbringung der Montagekraft F dient ein als Schelle ausgeführtes Aufnahmemittel 18, das an einem Kraftfahrzeugbauteil 22 befestigt werden kann, wie in Figur 8 gezeigt.

Das Aufnahmemittel 18 weist Einbuchtungen 19 auf, sodass der Elastomerkörper 11 im Bereich der Einbuchtungen 19 in die Innenkontur 15 weisende Aufdickungen erfährt, wenn die Montagekraft F über das Aufnahmemittel 18 auf den Elastomerkörper 11 aufgebracht wird, beispielsweise gemäß der Aufdickungen 16, wie diese im Elastomerkörper 11 in Figur 3 dargestellt sind. Folglich ergeben sich in den Bereichen der Einbuchtungen 19 Bereiche erhöhter Drücke, die zu einer schließlich gleichen Druckverteilung unter Berücksichtigung der Montagekraft F führen können.

Der Elastomerkörper 12 weist seitlich zur Fügerichtung 17 vorgesehene Aufdickungen 16 auf, die bei Rückfederung ebenfalls zu Bereichen eines erhöhten Druckes führen können, sodass schließlich bei montierter Anordnung des Lagerelementes 1, siehe Figur 8, ein über dem Umfang der Stabilisatorstange 14 gleichförmiger Druck zwischen den Elastomerkörpern 11 und 12 und der Stabilisatorstange 14 erzeugt werden kann.

Die Erfindung beschränkt sich in ihrer Ausführung nicht auf die vorstehend gezeigten bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Lagerelement

- 10: Stabilisator
- 11: Elastomerkörper
- 12: Elastomerkörper
- 13: Aufnahmedurchgang
- 14: Stabilisatorstange
- 15: Innenkontur
- 15': Innenkontur
- 16: Aufdickung
- 17: Fügerichtung
- 18: Aufnahmemittel
- 19: Einbuchtung
- 20: Haftvermittlerschicht
- 21: Teilungsebene
- 22: Kraftfahrzeugbauteil

- F: Montagekraft

## Patentansprüche

1. Lagerelement (1) zur Aufnahme eines Stabilisators (10) an einem Fahrzeug, aufweisend einen ersten Elastomerkörper (11) und einen zweiten Elastomerkörper (12), die halbschalenförmig ausgeführt sind und unter Bildung eines Aufnahmedurchgangs (13) zur Aufnahme einer Stabilisatorstange (14) mit Kreisquerschnitt aneinander angeordnet sind, und wobei die Elastomerkörper (11, 12) auf der Stabilisatorstange (14) des Stabilisators (10) aufpressbar und stoffschlüssig aufbringbar sind, sodass sich die Stabilisatorstange (14) durch den Aufnahmedurchgang (13) hindurch erstreckt,
**dadurch gekennzeichnet, dass** die Innenkontur (15) des Aufnahmedurchgangs (13) von einer Kreiskontur abweichend ausgebildet ist.

2. Lagerelement (1) nach Anspruch 1, **dadurch gekennzeichnet, dass** zwischen den Elastomerkörpern (11, 12) und der Stabilisatorstange (14) ein Klebstoff oder ein Haftvermittler (20) einbringbar ist, wobei die Innenkontur (15) des Aufnahmedurchgangs (13) derart ausgebildet ist, dass bei einem Aufpressen der Elastomerkörper (11, 12) auf die Stabilisatorstange (14) der Klebstoff oder der Haftvermittler (20) zwischen Innenkontur (15) und Stabilisatorstange (14) gleichförmig gepresst wird.

3. Lagerelement (1) nach Anspruch 1 oder 2, **dadurch gekennzeichnet, dass** die Innenkontur (15) des Aufnahmedurchgangs (13) derart ausgebildet ist, dass bei einem Aufpressen der Elastomerkörper (11, 12) auf die Stabilisatorstange (14) eine über dem Umfang der Stabilisatorstange (14) gleichförmige Verteilung des Klebstoffes oder des Haftvermittlers (20) erzeugbar ist.

4. Lagerelement (1) nach einem der Ansprüche 1 bis 3, **dadurch gekennzeichnet, dass** die Innenkontur (15) Aufdickungen (16) aufweist, die in den Aufnahmedurchgang (13) zur Hindurchführung der Stabilisatorstange (14) hineinragen und die bei Anordnung der Elastomerkörper (11, 12) auf der Stabilisatorstange (14) verformbar sind.

5. Lagerelement (1) nach Anspruch 4, **dadurch gekennzeichnet, dass** die Elastomerkörper (11, 12) aus einer Fügerichtung (17) aufeinander gefügt sind, wobei die Aufdickungen (16) seitlich zur Fügerichtung (17) in der Innenkontur (15) des Aufnahmedurchgangs (13) ausgebildet sind.

6. Lagerelement (1) nach Anspruch 4, **dadurch gekennzeichnet, dass** die Aufdickungen (16) im Bereich der Fügerichtung (17) in der Innenkontur (15) des Aufnahmedurchgangs (13) ausgebildet sind.

7. Lagerelement (1) nach einem der vorgenannten Ansprüche, **dadurch gekennzeichnet, dass** über dem Umfang der Innenkontur (15) verteilt mehrere, insbesondere zwei oder vier Aufdickungen (16) ausgebildet sind.

8. Lagerelement (1) nach einem der vorgenannten Ansprüche, **dadurch gekennzeichnet, dass** die Aufdickungen (16) im kraftunbeaufschlagten Zustand der Elastomerkörper (11, 12) in der Innenkontur (15) des Aufnahmedurchgangs (13) ausgebildet sind.

9. Lagerelement (1) nach einem der vorgenannten Ansprüche, **dadurch gekennzeichnet, dass** wenigstens einer der Elastomerkörper (11, 12) in einem Aufnahmemittel (18) einsitzt, wobei die Abweichung der Innenkontur (15) des Aufnahmedurchgangs (13) von einer Kreiskontur durch eine Formgebung des Aufnahmemittels (18) gebildet ist.

10. Verfahren zur Anordnung eines Lagerelements (1) an eine Stabilisatorstange (14) eines Stabilisators (10) für ein Fahrzeug,
- wobei ein erster Elastomerkörper (11) und ein zweiter Elastomerkörper (12) mit jeweils halbschalenförmiger Gestalt bereitgestellt werden, und wobei
- die Elastomerkörper (11, 12) unter Bildung eines Aufnahmedurchganges (13) aneinander angeordnet werden, sodass sich die Stabilisatorstange (14) des Stabilisators (10) durch den Aufnahmedurchgang (13) hindurch erstreckt, wobei die Stabilisatorstange (14) einen Kreisquerschnitt aufweist und wobei das Verfahren wenigstens die folgenden Schritte umfasst:
- Bereitstellen wenigstens eines Elastomerkörpers (11 , 12) mit einer Innenkontur (15) zur Bildung des Aufnahmedurchgangs (13), die von einer Kreiskontur abweichend ausgebildet ist und
- Aufpressen der Elastomerkörper (11, 12) auf die Stabilisatorstange (14) unter elastischer Verformung wenigstens einer der Innenkonturen (15) der Elastomerkörper (11, 12), sodass sich die Innenkontur (15) des wenigstens einen Elastomerkörpers (11, 12) an die Kontur der Stabilisatorstange (14) anformt.

11. Verfahren nach Anspruch 10, **dadurch gekennzeichnet, dass** wenigstens ein Aufnahmemittel (18) bereitgestellt wird, in dem ein Elastomerkörper (11, 12) aufgenommen wird, wobei die Abweichung der Innenkontur (15) des Aufnahmedurchgangs (13) von einer Kreiskontur durch eine Formgebung des Aufnahmemittels (18) gebildet wird.

12. Verfahren nach Anspruch 10, **dadurch gekennzeichnet, dass** der Elastomerkörper (11, 12) im Aufnahmemittel (18) aufgenommen wird, wobei das Aufnahmemittel (18) wenigstens eine Einbuchtung (19) aufweist, die sich bei Aufbringen einer Montagekraft (F) im Elastomerkörper (11, 12) geometrisch abbildet, sodass die in die Innenkontur (15) weisende Aufdickung (16) gebildet wird.

## Claims

1. Bearing element (1) for receiving a stabilizer (10) on a vehicle, having a first elastomer body (11) and a second elastomer body (12) which are of half-shell-shaped design and which are arranged on one another so as to form a receiving passage (13) for receiving a stabilizer rod (14) with a circular cross section, and wherein the elastomer bodies (11, 12) can be pressed onto and cohesively attached to the stabilizer rod (14) of the stabilizer (10), such that the stabilizer rod (14) extends through the receiving passage (13), **characterized in that** the inner contour (15) of the receiving passage (13) is designed so as to deviate from a circular contour.

2. Bearing element (1) according to Claim 1, **characterized in that** an adhesive or an adhesion promoter (20) is introducible between the elastomer bodies (11, 12) and the stabilizer rod (14), wherein the inner contour (15) of the receiving passage (13) is designed such that, when the elastomer bodies (11, 12) are pressed onto the stabilizer rod (14), the adhesive or the adhesion promoter (20) is pressed uniformly between the inner contour (15) and stabilizer rod (14).

3. Bearing element (1) according to Claim 1 or 2, **characterized in that** the inner contour (15) of the receiving passage (13) is designed such that, when the elastomer bodies (11, 12) are pressed onto the stabilizer rod (14), a uniform distribution of the adhesive or of the adhesion promoter (20) over the circumference of the stabilizer rod (14) can be generated.

4. Bearing element (1) according to one of Claims 1 to 3, **characterized in that** the inner contour (15) comprises thickened portions (16) which project into the receiving passage (13) for the leadthrough of the stabilizer rod (14) and which are deformable when the elastomer bodies (11, 12) are arranged on the stabilizer rod (14).

5. Bearing element (1) according to Claim 4, **characterized in that** the elastomer bodies (11, 12) are joined together from a joining direction (17), wherein the thickened portions (16) are formed in the inner contour (15) of the receiving passage (13) laterally with respect to the joining direction (17).

6. Bearing element (1) according to Claim 4, **characterized in that** the thickened portions (16) are formed in the inner contour (15) of the receiving passage (13) in the region of the joining direction (17).

7. Bearing element (1) according to one of the preceding claims, **characterized in that** multiple, in particular two or four, thickened portions (16) are formed so as to be distributed over the circumference of the inner contour (15).

8. Bearing element (1) according to one of the preceding claims, **characterized in that** the thickened portions (16) are formed in the inner contour (15) of the receiving passage (13) in the state in which the elastomer bodies (11, 12) are not subjected to force.

9. Bearing element (1) according to one of the preceding claims, **characterized in that** at least one of the elastomer bodies (11, 12) is seated in a receiving means (18), wherein the deviation of the inner contour (15) of the receiving passage (13) from a circular contour is formed by a shaping of the receiving means (18).

10. Method for arranging a bearing element (1) on a stabilizer rod (14) of a stabilizer (10) for a vehicle,
- wherein a first elastomer body (11) and a second elastomer body (12), each of half-shell-shaped form, are provided, and wherein
- the elastomer bodies (11, 12) are arranged on one another so as to form a receiving passage (13) such that the stabilizer rod (14) of the stabilizer (10) extends through the receiving passage (13), wherein the stabilizer rod (14) has a circular cross section and wherein the method comprises at least the following steps:
- providing at least one elastomer body (11, 12) with an inner contour (15) for forming the receiving passage (13), which inner contour is designed so as to deviate from a circular contour, and
- pressing the elastomer bodies (11, 12) onto the stabilizer rod (14) with elastic deformation of at least one of the inner contours (15) of the elastomer bodies (11, 12), such that the inner contour (15) of the at least one elastomer body (11, 12) molds onto the contour of the stabilizer rod (14).

11. Method according to Claim 10, **characterized in that** at least one receiving means (18) is provided in which an elastomer body (11, 12) is received, wherein the deviation of the inner contour (15) of the receiving passage (13) from a circular contour is formed by a shaping of the receiving means (18).

12. Method according to Claim 10, **characterized in that** the elastomer body (11, 12) is received in the receiving means (18), wherein the receiving means (18) has at least one indentation (19) which is geometrically replicated in the elastomer body (11, 12) when an assembly force (F) is applied, such that the thickened portion (16) which points into the inner contour (15) is formed.

## Revendications

1. Élément de palier (1) destiné à recevoir un stabilisateur (10) sur un véhicule, ledit élément de palier comprenant un premier corps en élastomère (11) et un deuxième corps en élastomère (12) qui sont en forme de demi-coque et sont disposés l'un à côté de l'autre de façon à former un passage de réception (13) destiné à recevoir une barre de stabilisateur (14) de section circulaire, et les corps en élastomère (11, 12) pouvant être pressés et appliqués par liaison de matière sur la barre de stabilisateur (14) du stabilisateur (10) de sorte que la barre de stabilisateur (14) s'étende à travers le passage de réception (13),
**caractérisé en ce que** le contour intérieur (15) du passage de réception (13) est conçu de manière à être différent d'un contour circulaire.

2. Élément de palier (1) selon la revendication 1, **caractérisé en ce qu'un** adhésif ou un promoteur d'adhérence (20) peut être introduit entre les corps en élastomère (11, 12) et la barre de stabilisateur (14), le contour intérieur (15) du passage de réception (13) étant conçu de telle sorte que, lorsque le corps en élastomère (11, 12) est pressé sur la barre de stabilisateur (14), l'adhésif ou le promoteur d'adhérence (20) est pressé uniformément entre le contour intérieur (15) et la barre de stabilisateur (14) .

3. Élément de palier (1) selon la revendication 1 ou 2, **caractérisé en ce que** le contour intérieur (15) du passage de réception (13) est conçu de façon à générer, lorsque le corps en élastomère (11, 12) est pressé sur la barre de stabilisateur (14), une distribution de l'adhésif ou du promoteur d'adhérence (20) qui est uniforme sur le pourtour de la barre de stabilisateur (14) .

4. Élément de palier (1) selon l'une des revendications 1 à 3, **caractérisé en ce que** le contour intérieur (15) présente des épaississements (16) qui font saillie dans le passage de réception (13) afin de guider la barre de stabilisateur (14) à travers celui-ci et qui peuvent être déformés lorsque le corps en élastomère (11, 12) est disposé sur la barre de stabilisateur (14).

5. Élément de palier (1) selon la revendication 4, **caractérisé en ce que** les corps en élastomère (11, 12) sont assemblés depuis une direction d'assemblage (17), les épaississements (16) étant formés latéralement à la direction d'assemblage (17) dans le contour intérieur (15) du passage de réception (13).

6. Élément de palier (1) selon la revendication 4, **caractérisé en ce que** les épaississements (16) sont formés dans la zone de la direction d'assemblage (17) dans le contour intérieur (15) du passage de réception (13) .

7. Élément de palier (1) selon l'une des revendications précédentes, **caractérisé en ce que** plusieurs (notamment deux ou quatre) épaississements (16) sont formés de manière répartie sur le pourtour du contour intérieur (15).

8. Élément de palier (1) selon l'une des revendications précédentes, **caractérisé en ce que** les épaississements (16) sont formés dans le contour intérieur (15) du passage de réception (13) lorsque le corps élastomère (11, 12) n'est pas soumis à une force.

9. Élément de palier (1) selon l'une des revendications précédentes, **caractérisé en ce que** l'un au moins des corps en élastomère (11, 12) est logé dans un moyen de réception (18), la différence entre le contour intérieur (15) du passage de réception (13) et un contour circulaire étant réalisée par mise en forme du moyen de réception (18).

10. Procédé de disposition d'un élément de palier (1) sur une barre de stabilisateur (14) d'un stabilisateur (10) d'un véhicule,
- un premier corps en élastomère (11) et un deuxième corps en élastomère (12) étant fournis qui ont chacun une forme en demi-coque, et
- les corps en élastomère (11, 12) étant disposés l'un à côté de l'autre de façon à former un passage de réception (13) de sorte que la barre de stabilisateur (14) du stabilisateur (10) s'étende à travers le passage de réception (13), la barre de stabilisateur (14) ayant une section transversale circulaire et le procédé comprenant au moins les étapes suivantes :
- fournir au moins un corps en élastomère (11, 12) présentant un contour intérieur (15) de façon à former le passage de réception (13) qui est conçu pour être différent d'un contour circulaire et
- presser le corps en élastomère (11, 12) sur la barre de stabilisateur (14) par déformation élastique d'au moins un des contours intérieurs (15) des corps en élastomère (11, 12) de sorte que le contour intérieur (15) de l'au moins un corps en élastomère (11, 12) épouse le contour de la barre de stabilisateur (14).

11. Procédé selon la revendication 10, **caractérisé en ce qu'au** moins un moyen de réception (18) est fourni dans lequel est reçu un corps en élastomère (11, 12), la différence entre le contour intérieur (15) du passage de réception (13) et un contour circulaire étant réalisée par mise en forme du moyen de réception (18) .

12. Procédé selon la revendication 10, **caractérisé en ce que** le corps en élastomère (11, 12) est reçu dans le moyen de réception (18), le moyen de réception (18) comportant au moins une dépression (19) qui se forme géométriquement dans le corps en élastomère (11, 12) lorsqu'une force de montage (F) est appliquée de façon à former l'épaississement (16) pointant vers le contour intérieur (15).
